## Europäisches Patentamt
## European Patent Office
## Office européen des brevets

(19)

(11) Numéro de publication: **0 052 364**
**B1**

(12)

# FASCICULE DE BREVET EUROPEEN

(45) Date de publication du fascicule du brevet: **27.02.85**

(51) Int. Cl.⁴: **B 60 B 31/00, B 60 B 1/04**

(21) Numéro de dépôt: **81109703.9**

(22) Date de dépôt: **16.11.81**

(54) **Machine à enfiler les rayons dans les moyeux de roue.**

(30) Priorité: **19.11.80 FR 8024529**

(43) Date de publication de la demande:
**26.05.82 Bulletin 82/21**

(45) Mention de la délivrance du brevet:
**27.02.85 Bulletin 85/09**

(84) Etats contractants désignés:
**AT BE CH DE GB IT LI LU NL SE**

(56) Documents cités:
**FR-A-1 129 669**
**GB-A-1 050 786**
**US-A-2 759 530**

(73) Titulaire: **BG TECHNIC SARL**
**Charvonnex**
**F-74370 Pringy (FR)**

(72) Inventeur: **Guillermier, Bernard**
**Route de Provence**
**F-74330 Epagny (FR)**

(74) Mandataire: **Modiano, Guido et al**
**MODIANO & ASSOCIATI S.A.S. Via Meravigli, 16**
**I-20123 Milan (IT)**

Courier Press, Leamington Spa, England.

## Description

La présente invention a trait à une machine a enfiler les rayons dans les moyeux de roue.

On connaît de telles machines dans lesquelles les moyeux sont disposés avec leur axe horizontal et où les rayons horizontaux sont poussés dans les trous des moyeux. De telles machines sont très compliquées et de plus, en cas d'erreur de positionnement, le rayon se tord et on est contraint d'arrêter la machine. On connait par ailleurs des distributeurs de rayons permettant l'enfilage par gravite de tous les rayons à la fois (FR—A—1129669).

La machine selon l'invention servant a enfiler les rayons dans les moyeux de roue comportant deux couronnes percées chacune de 2n trous répartis régulièrement est caractérisée en ce qu'elle comporte d'une part au moins un poste comprenant:

— des premiers moyens pour maintenir le moyeu dans une position où son axe fait un angle aigu inférieur à 30° avec la verticale
— des deuxièmes moyens pour entraîner en rotation le moyeu autour de son axe
— un premier et un second tube réglables en position et faisant un faible angle avec l'axe du moyeu, terminés chacun par un bec, chaque bec étant associé à une couronne du moyeu
— des troisièmes moyens servant à animer lesdits becs d'un mouvement vertical de va et vient, lesdits becs étant positionnés en position basse juste au-dessus des couronnes associées pour desservir les trous
— es quantrièmes moyens servant à l'alimentation rayon par rayon de chaque tube lorsque les becs sont en positions basses, les rayons descendant par gravité dans les tubes avec leur partie aplatie vers le haut
— des cinquièmes moyens servant à commander lesdits premiers, ceuxièmes, troisièmes et quatrièmes moyens de façon que le moyeu soit entraîné en rotation dans un sens choisi et pour parcourir un tour au cours duquel les becs sont descendus n fois, et que, après chaque descente des becs, un rayon soit envoyé dans chaque tube, les becs étant abaissés tous les $2\pi/n$ et n'étant relevés qu'après être passés chacun sur au moins un trou et après qu'un rayon soit tombé par gravité dans le premier trou rencontré par chacun des becs, d'autre part des moyens de manutention du moyeu pour prendre le moyeu après la première passe et le replacer, après l'avoir renversé, dans une position où les trous restant vont être pourvue de rayons au cours d'une seconde passe.

Dans la machine selon l'invention, les moyeux font un angle inférieur à 30° avec la verticale ce qui permet d'utiliser la gravité pour faire entrer les rayons dans les trous correspondants sans risque de torsion de ces rayons.

Selon une première réalisation de l'invention, les moyens de manutention replacent le moyeu, après l'avoir renversé, dans la position qu'il avait au cours de la première passe et les tubes sont réglés pour que les deux becs surplombent chacun un trou simultanément.

Ainsi la totalité des rayons est mise en place dans le même poste. La machine peut ne comporter qu'un seul poste et est donc particulièrement simple.

Selon une seconde réalisation de la machine selon l'invention, elle comporte deux postes semblables, les tubes de chaque poste surplombent chacun un trou simultanément, les becs supérieure des deux postes étant décalés de $2k\pi/n$ (k entier$\geq$o) et les moyens de manutention prennent le moyeu du premier poste où il a été pourvu d'un rayon, un trou sur deux au cours de la première passe, et le placent après l'avoir renversé entre les premiers moyens du second poste où, au cours de la passe suivante, les trous restés vides sont pourvus de rayons.

Dans cette seconde réalisation, les moyens de manutention comportent avantageusement quatre pinces qui se déplacent entre quatre positions permettant simultanément d'amener des moyeux vides en position de travail sur le premier poste, d'amener des moyeux dont la moitié des trous sont munis de rayons de la position de travail du premier poste à la position de travail du second poste et d'évacuer les moyeux pleins de la position de travail du second poste.

Selon une caractéristique de l'invention, chaque poste est muni de moyens de détection fournissant un signal d'erreur indiquant que le rayon n'est pas entré complétement dans le trou correspondant et les moyens de commande en réponse au signal des moyens de détection commandent les deuxièmes moyens du poste, dans un premier temps, pour faire tourner le moyeu d'un angle égal ou inférieur à $\pi/n$ dans le sens inverse du sens choisi puis, dans un second temps, faire tourner du même angle dans le sens choisi.

Il est aussi possible d'augmenter la fiabilité de la machine. En effet, même si le rayon n'est pas entré dans le trou correspondant, on fait repasser plusieurs fois le trou devant le bec du tube permettant ainsi au rayon de venir à poste.

Selon une réalisation particulièrement simple de cette caractéristique, les moyens de détection comportent un chariot mobile latéralement à partir d'une butée vers laquelle il est rappelé, les deux tubes ètant montés sur ledit chariot; le chariot est entraîné jusqu'à une autre butée par le mouvement de rotation de la couronne communiqué au tube par l'intermédiaire du rayon situé pour partie dans ledit tube et entré incomplètement dans le trou de la couronne; les deux tubes sont disposés de façon à ce que le chariot tende à se rapprocher de la seconde butée lorsqu'un rayon est coincé dans l'un ou l'autre tube, l'une des deux butées est munie d'un détecteur fournissant le signal d'erreur.

L'invention va être maintenant décrite plus en détail en se référant à deux modes de réalisation particuliers cités à titre d'exemple et représentés par des dessins annexés.

La figure 1 représente une vue de côté de la machine selon l'invention.

La figure 2 représente une vue de face de la machine selon l'invention.

La figure 3 représente une vue de côté détaillés de la partie inférieure du poste de chargement de la machine.

La figure 4 représente un moyeu.

La figure 5 représente un moyeu introduit entre les deux axes.

La figure 6 représente une vue détaillée du chariot du poste de chargement.

La figure 7 représente une vue de côté de la partie supérieure du poste de chargement.

La figure 8 représente une vue de face de la partie supérieure du poste de chargement.

Les figures 9A et 9B représentent une vue du peigne permettant de mettre les rayons sur les rampes.

La figure 10 représente le système de commande de chargement des rayons.

La figure 11 représente une diagramme impulsionnel du système de la figure 10.

La figure 12 représente très schématiquement une vue de face d'une machine à 2 postes de chargement.

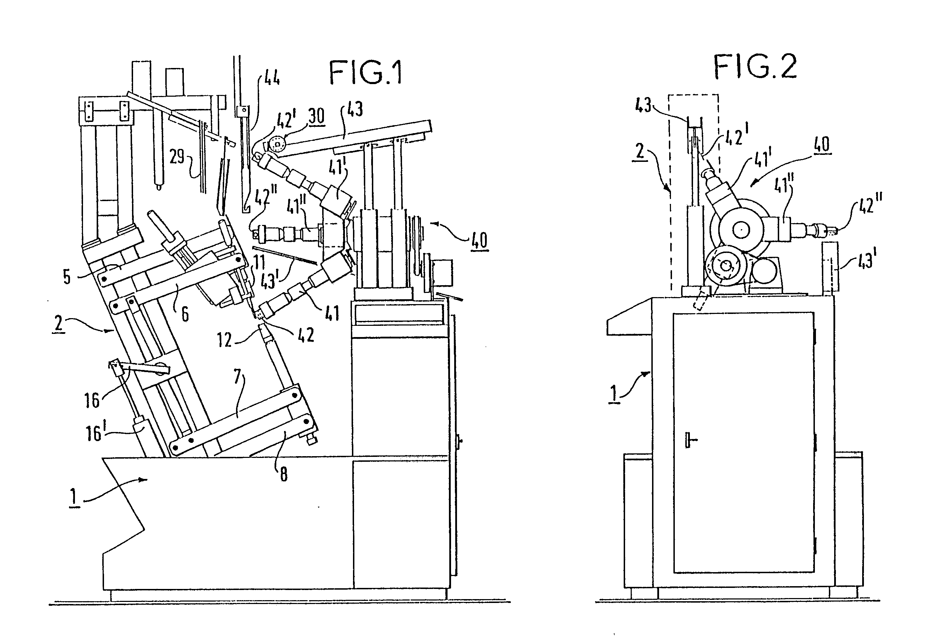

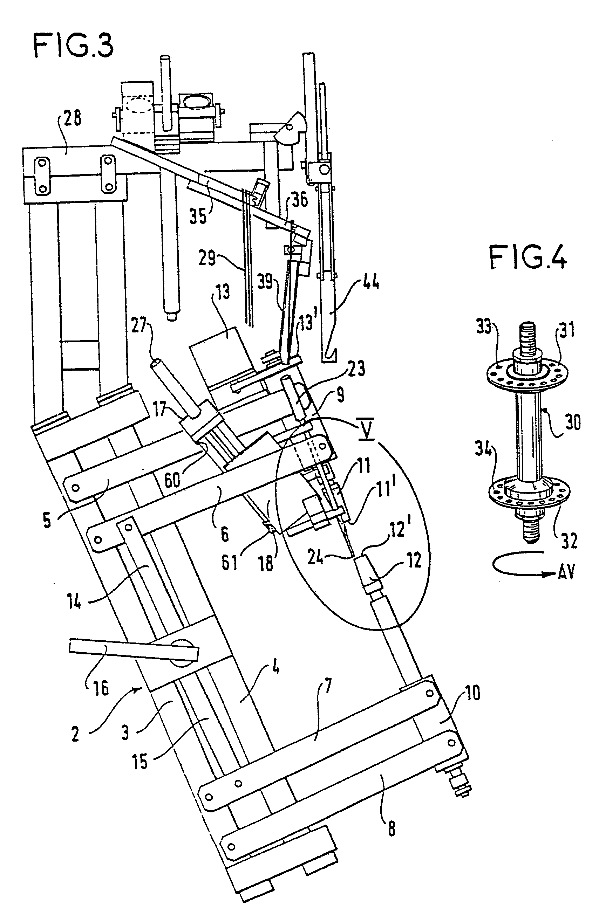

La machine telle que représentée à la figure 1 comporte un bâti 1 sur lequel est monté un poste 2. Le poste 2 (voir figure 3) comporte deux poutres fixes 3 et 4, parallèles et situées dans un plan vertical et inclinées de 22° 30' par rapport à la verticale.

Sur la poutre 3 sont articulées quatre poutres latérales 5, 6, 7, 8 qui peuvent prendre une position perpendiculaire à la poutre 3. A l'extrémité des poutres 5 et 6 est monté une poutre 9 parallèle à la poutre 3 formant avec les poutres 5 et 6 et la poutre fixe 3 un parallélogramme déformable. De même à l'extrémité des poutres 7 et 8 est monté une poutre 10 formant avec les poutres 5 et 6 et la poutre 3 fixe un parallélogramme déformable. Les poutres 9 et 10 sont alignées et sont traversées par des axes 11 et 12 pouvant tourner. L'axe 11 est entraîné en rotation par l'intermédiaire d'une poulie crantée 13' par un moteur 13 fixé sur la poutre 9.

La poutre 6 est relevée sous l'effet d'une barre 14 et la poutre 7 est abaissée sous l'effet d'une barre 15. Les barres 14 et 15 sont manoeuvrées simultanément par un bras 16 qui est la biellette de 2 bielles comportant l'une la barre 14 l'autre la barre 15. Le bras 16 est manoeuvré par un vérin 16'.

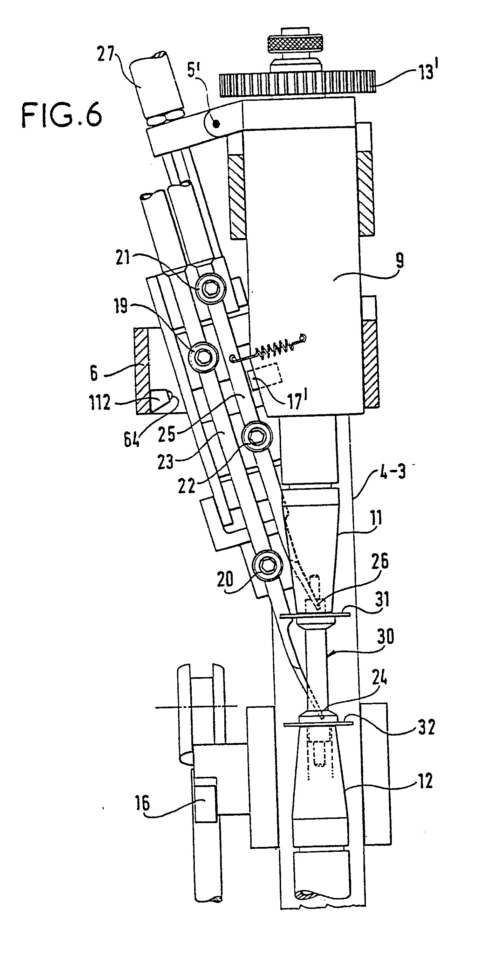

Sur la poutre 5 est monté un axe 5' parallèle à la poutre 5 et autour duquel peut pivoter un chariot 17. Sur le chariot 17 est monté un bloc 18 muni de 2 paires de tiges orientables 19, 20 et 21, 22 (voir figure 6). à l'extrémité de la paire 19, 20 est disposé un tube 23 terminé par un bec 24. A l'extrémité de la paire 21, 22 est disposé un tube 25 terminé par un bec 26. Ces tubes sont orientables grâce aux tiges 19, 20 et 21, 22 et peuvent être positionnées grâce à des vis qui servent à les bloquer dans les tiges.

Le chariot 17 est attiré par un ressort contre une butée 17' (solidaire de la poutre 9) dans une position dite de travail où les becs des tubes sont positionnés pour que les rayons pénétrent dans les moyeux.

Le chariot 17 peut par rotation autour de son axe s'écarter de cette position pour venir contre une butée réglable 112 munie d'un détecteur 64 (solidaire de la poutre 6).

Sur le chariot 17 est monté un vérin 27 qui permet de relever le bloc 18 d'une certaine hauteur h. qui est supérieure à la distance séparant les extrémités 11', 12' des axes 11 et 12.

Une butée 60 est activée quand le bloc 18 est en position haute et une butée 61 est activée quand le bloc 18 est en position basse.

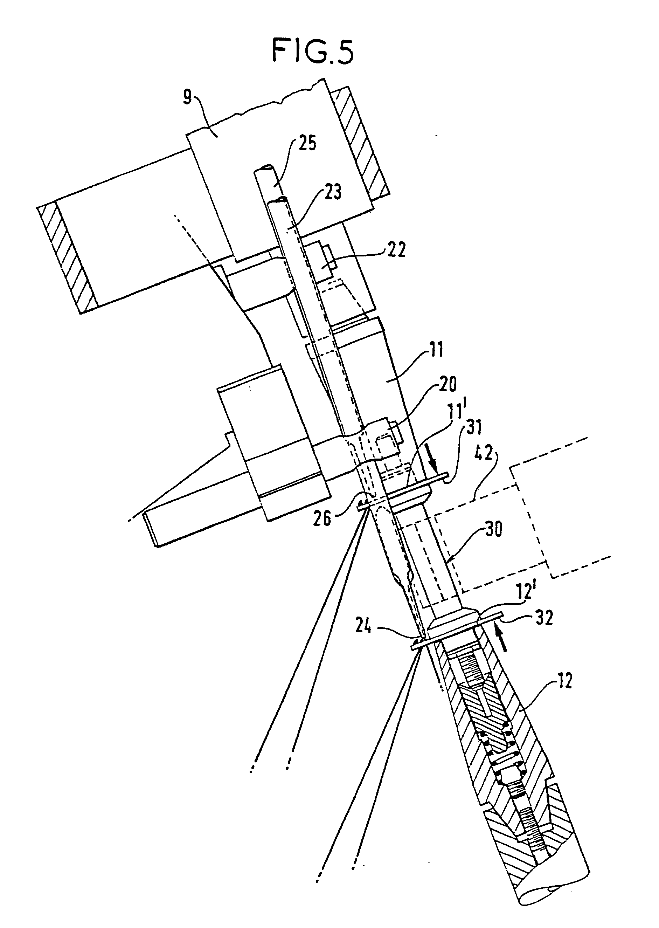

Entre l'extrémité 11' de l'axe 11 et 1' extrémité 12' de l'axe 12, on vient coincer un moyeu 30 de roue, l'axe de moyeu se confondant avec l'axe de symétrie des axes 11 et 12 (voir figure 5).

Ce moyeu comporte 2 couronnes 31, 32 munies chacune de 2n trous 33, 34. Les trous 33 sont placés régulièrement sur une circonférence de la couronne 31 et les trous 34 sont placés régulièrement sur une circonférence de la couronne 32 (voir figure 4).

Les tubes 23 et 25 ont été positionnés de façon que lorsque le bec 24 se trouve au-dessus d'un trou de la couronne supérieure 31, le bec 26 se trouve au-dessus d'un trou de la couronne inférieure 32. De plus les becs 24 et 26 sont positionnés de façon que lorsque le moyeu 30 tourne dans le sens trigonométrique (sens avant), il entraîne par l'intermédiaire d'un rayon coincé dans une couronne et dans l'un des tubes le chariot 17 vers sa butée réglable 112 munie d'un détecteur 64.

Lorsque la biellette 16 est manoeuvrés, les extrémités 11' et 12' s'écartent libérant le moyeu 30.

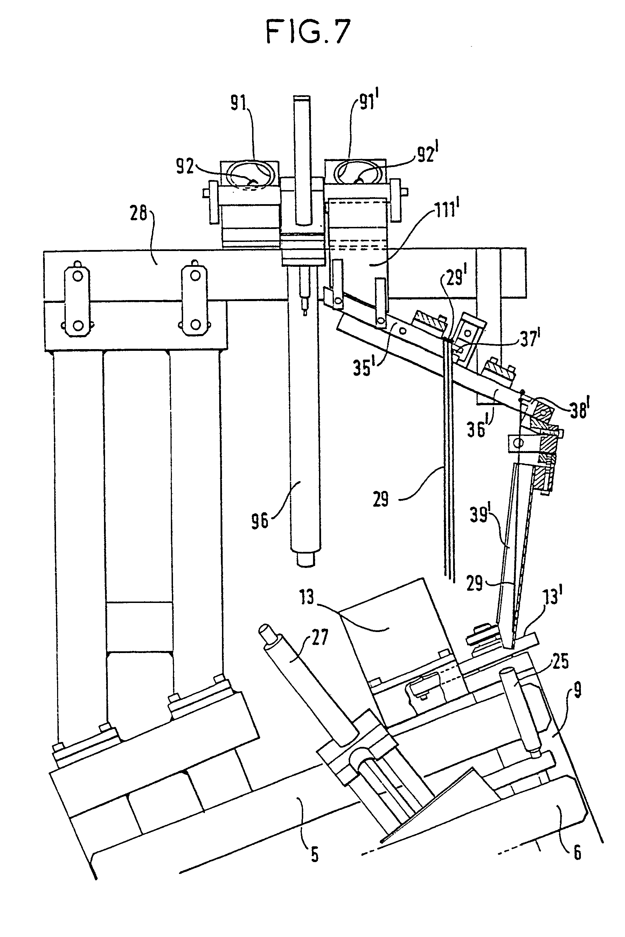

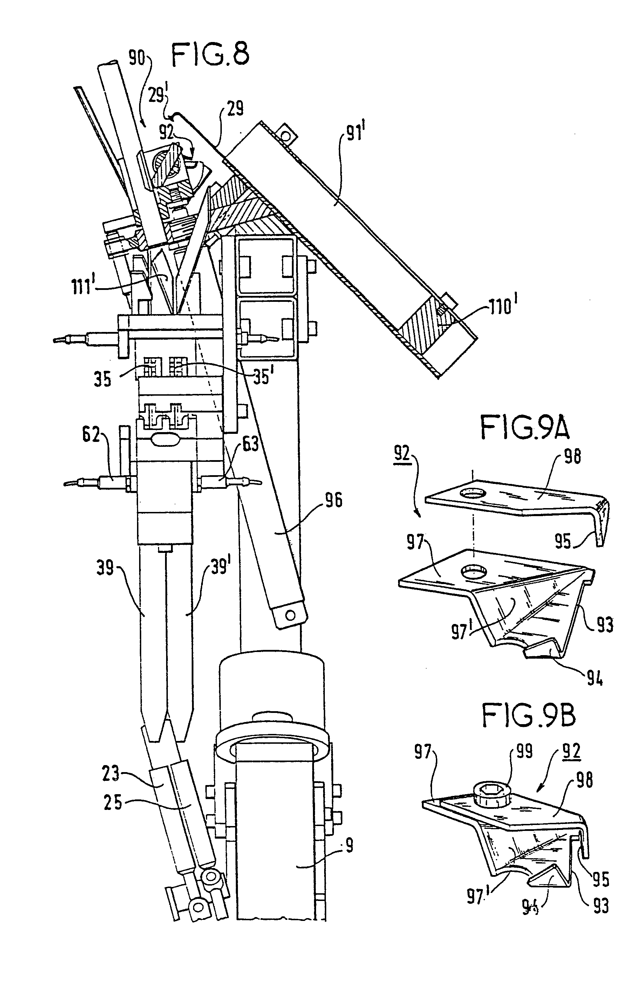

Le poste 2 (voir figures 7 et 8) comporte également une potence 28 dont les poutres verticales sont fixées aux sommets des poutres fixes 3 et 4. Sur cette potence 28 sont fixées 2 rampes juxtaposées 35 et 35' dans lesquelles sont engagés les rayons 29 avec leur partie aplatie 29' vers le haut (sur la figure 7, seule la rampe 35' est visible, on a arraché les rampes 35 et 36 le guide 39 et le tube 23 associés).

Les rampes 35, 35' font un angle de 25° avec l'horizontale et les rayons se déplacent dans celles-ci toujours en restant verticaux.

En dessous des rampes 35 et 35' sont disposées 2 rampes juxtaposées 36 et 36' et parallèles aux rampes 35 et 35' (seule la rampe 36' est visible sur la figure 7).

Seules les rampes 35' et 36' seront décrites.

A l'extrémité inférieure de la rampe 35' est disposé un vérou 37' qui bloque une série de rayons 29 qui se quivant et qui, lorsqu'il est manoeuvré, ne laisse échapper qu'un seul rayon.

Le rayon tombe par gravité dans la rampe 36' dont l'extrémité inférieure est décalée vers le bas par rapport à l'extrémité inférieure de la rampe 35'. A l'extrémité inférieure de cette rampe 36' est disposé un verrou 38'.

Le rayon vient en butée sur le verrou 38' et est engagé dans un guide ouvert 39' qui est incliné de 5° par rapport à la verticale mais de sens opposé par rapport à l'angle de 22° 30' dont sont inclinées les poutres 3 et 4. Le guide 39' a une longueur égale à celle d'un rayon et il se présente comme un demi cylindre ouvert vers l'arrière. L'orifice inférieur de ce guide 39' surplombe l'orifice supérieure du tube 25. Ainsi lorsque le verrou 38' est manoeuvré le rayon bloqué contre ce verrou est laché et par gravité il tombe le long du guide 39' dans le tube 25.

Les rampes 35 et 36 sont également munies de verrous 37 et 38 et d'un guide 39 dont l'orifice surplombe le tube 23. Un détecteur 62 détecte la présence d'un rayon dans le guide 39 tandis qu'un détecteur 63 détecte la présence d'un rayon dans le guide 39'.

On peut alimenter les rampes 35 et 35' en rayons manuellement ou bien automatiquement. Sur les figures 7 et 8 ont été représentés des dispositifs de chargement automatique de la rampe 35'.

Le dispositif 90 associé aux rampes 35 et 35' comporte 2 bacs 91, 91' pour rayons ayant un fond réglable 110, 110'. Sur la figure 8 seul le bac 91' servant à alimenter la rampe 35' est représenté. Chaque bac 91, 91' est orienté à 45° et les têtes ou parties aplaties des rayons dépassent de l'orifice des becs.

Le dispositif 90 comporte, associé à chaque bac, un peigne 92, 92'.

Les peignes 92, 92' (voir figures 9A, 9B) sont mobiles en translation sur une rampe légèrement inclinée par rapport à la verticale sous l'effet d'un vérin 96 et tournent autour d'un axe horizontal sous l'effet de cames (non représentées).

Chaque peigne 92, 92' comprend une pièce inférieure 97 et une pièce supérieure 98 reliées par un écrou 99. La pièce inférieure 97 comporte un dièdre 97' munie d'une rampe inclinée 93 terminée par une dent 94. La rampe 93 est surmontés par une rampe 95 de la pièce 98 dans la partie opposée à la dent 94.

Ainsi lorsque le peigne 92' se soulève la partie de la rampe 93 voisine de la dent 94 vient au contact d'une ou plusieurs têtes de rayon. Le peigne 92' continue à se soulever en tournant vers le haut. Lorsque le dent 94 est plus élevée que la rampe 93, les têtes des rayons glissent par gravité entre les rampes 93 et 95. Le peigne 92' va atteindre sa position haute, les rayons dont les têtes sont saisies par le peigne 92' sont dégagés complètement du bac et ont donc par gravité une position verticale. En atteignant sa position haute le peigne pivote vers le bas et les têtes des rayons glissent vers la dent 94, l'extrémité inférieure des rayons s'engageant alors grâce à une pièce en forme de V 111' dans la rampe 35'. Au voisinage de la dent 94 les têtes des rayons échappent à la rampe 93 et les rayons tombent par gravité dans la rampe 35' où ils restent suspendus par leurs têtes.

L'axe du moyeu 30 (voir figures 4 et 5) en position de travail, c'est-à-dire coincé entre les axes 11 et 12, doit faire un angle a inférieur à 30° avec la verticale et l'axe des tubes fera un angle b compris entre 2° et 15° par rapport au plan passant par les axes 11, 12 et les poutres fixes 3 et 4 et un angle c compris entre 2° et 15° par rapport au plan perpendiculaire au précédent et passant par les axes 11 et 12. L'angle entre la direction de déplacement d'un trou de la couronne et le tube d'amenée des rayons étant au plus égal à 90°.

De préférence on prend comme angle a, 22° 30', comme angle b, 4° et comme angle c, 7°.

La machine représentée à la figure 1 comporte en outre des moyens de manutention 40 comportant 3 bras 41, 41', 41" orientés suivant 3 axes régulièrement répartis autour d'un axe horizontal (voir également figure 2). Chaque bras est muni à son extrémité d'une pince 42, 42', 42" qui serre le milieu du moyeu, les 2 couronnes encadrent alors la pince. Chaque pince peut tourner de 180° autour de l'axe du bras. L'ensemble des bras tourne de 120° autour d'un axe horizontal et sert à transporter les moyeux vides vers la position de travail entre les extrémités 11' et 12', à maintenir le moyeu pendant qu'il est empli de rayon un trou sur 2, à retourner le moyeu, à évacuer les moyeux pourvus complètement de rayons. On a simplement fait figurer une rampe 43 d'amenée des moyeux vides et des crochets 44 pour transporter le moyeu vide de la rampe 43 à la pince 42 du bras 41. De même il existe une rampe d'évacuation 43' des moyeux pleins associée à des crochets qui vont prendre le moyeu dans la pince 42" du bras 41" pour l'amener sur ladite rampe d'évacuation.

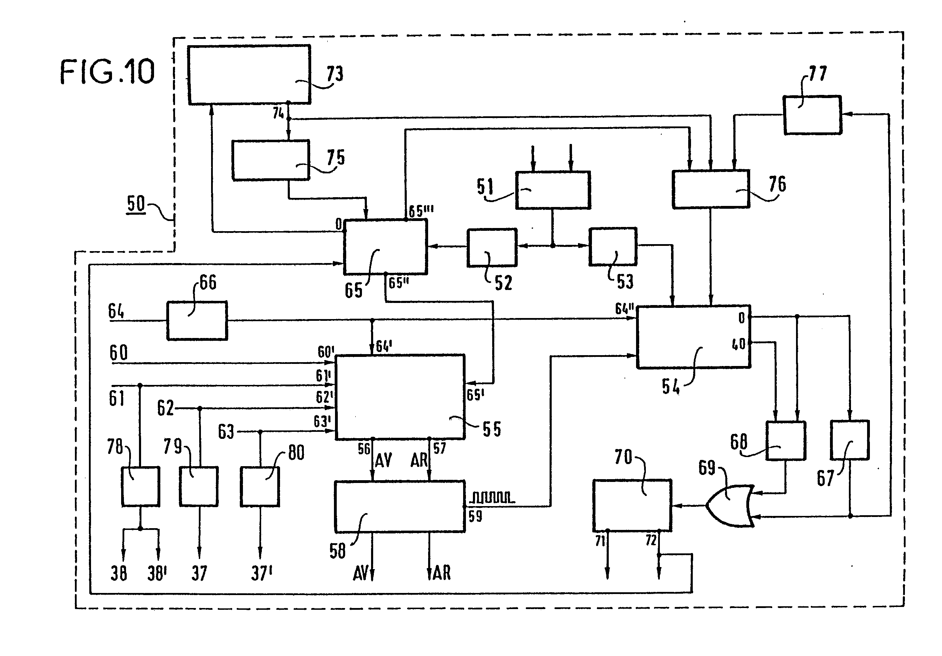

Le fonctionnement de la machine selon l'invention va être décrit plus particulièrement à l'aide de la figure 10.

La pince 42 amène un moyeu vide en position entre les axes 11 et 12 qui sont ouverts, les axes 11 et 12 se ferment coïnçant entre leurs extrémités le moyeu.

La pince 42' serre toujours le moyeu mais suffisamment faiblement pour que, lorsque l'axe 11 tourne, le moyeu soit entraîné en rotation.

Le circuit de commande 50 comprend un système de roues codeuses 51 qui permettent d'afficher le nombre 4n de trous que comporte le moyeu. Par exemple on code 16 pour le nombre 4n. On peut également coder 20, 24, 28, 32, 36, 40, 44 etc... selon le nombre de trous du moyeu.

La sortie des roues codeuses 51 est reliée à un premier transcodeur 52 qui fournit le nombre n et un second transcodeur 53 qui fournit le nombre 1200/n (dans l'exemple choisi le moteur parcourt 1200 pas par tour).

Dans le cas où 4n est égal à 16, le transcodeur 52 fournit 4 sur sa sortie et le transcodeur 53 fournit 300. Le nombre 300 est entré dans le compteur-décompteur 54. Le transcodeur 52 est relié à un compteur-décompteur 65 qui décompte de n à 0. Dès que ce compteur-décompteur 65 est chargé et qu'il n'a pas décompté encore jusqu'à 0, il fournit sur une sortie 65″ un signal non nul. Le circuit 50 comporte également un dispositif de validation 55 qui a 2 sorties, une sortie 56 qui, lorsqu'elle fournit un signal, fait tourner le moteur 13 dans le sens avant et une sortie 57 qui, lorsqu'elle fournit un signal, fait tourner le moteur 13 dans le sens arrière. Lorsque le moteur tourne dans le sens avant, le moyeu tourne suivant la flèche Av (figure 4).

Les sorties 56 et 57 sont appliquées sur un translateur 58 qui fournit la puissance au moteur 13 et le fait tourner soit dans le sens avant, soit dans le sens arrière.

Il est incorporé au translateur 58 un oscillateur qui fournit sur la sortie 59 une suite d'impulsions à une fréquence donnée, chaque fois que le moteur 13 est commandé soit en avant soit en arrière. Il fournit 300 impulsions lorsque le moteur tourne de $2\pi/n$.

Le dispositif de validation 55 comporte des entrées 60′, 61′, 62′, 63′, 64′, 65′. L'entrée 60′ est reliée à la butée 60 montée sur le chariot 17 qui indique que le bloc 18 est en position haute. L'entrée 61′ est reliée à la butée 61 montée sur le chariot 17 qui indique que le bloc 18 est en position basse.

L'entrée 62′ est relié au détecteur 62 qui indique qu'un rayon est engagé dans la rampe 36.

L'entrée 63′ est reliée à un détecteur 63 qui indique qu'un rayon est engagé dans la rampe 36′.

La sortie 65′ est reliée à la sortie 65″ du compteur 65 et est activée tant que le compteur 65 n'a pas atteint zéro.

Le dispositif de validation ne fournit un signal de commande que lorsque 62′ et 63′ sont activés (ce qui indique la présence d'un rayon dans les rampes 36 et 36′), que 65′ est activé et que soit 60′, soit 61′ sont activés (indiquant que le bloc 18 est soit en position haute, soit en position basse).

Lorsque le bloc 18 est entre sa position haute et sa position basse, le moteur 13 n'est pas alimenté.

L'entrée 64′ est reliée par l'intermédiaire d'un temporisateur 66 au détecteur 64 monté sur la butée 112 contre laquelle vient buter le chariot 17 lorsqu'un rayon reste engagé dans un des tubes.

Lorsque le détecteur 64 est activé, le temporisateur 66 fournit une impulsion d'une largeur déterminée appliquée à l'entrée 64′ du dispositif de validation 55 et à une entrée 64″ du compteur-décompteur 54.

Tant que dure cette impulsion, le dispositif de validation 55 produit un signal de commande sur sa sortie 57 (le moteur 13 tourne en arrière) et le compteur-décompteur 54 compte les impulsions.

Lorsque aucun signal n'est appliqué sur les entrées 64′ et 64″ (ce qui est le cas courant), le dispositif de validation 55 fournit un signal sur sa sortie 56 (le moteur 13 tourne en avant) et le compteur-décompteur 54 décompte.

Ainsi lorsqu'un rayon reste engagé dans le tube, ce dernier est entraîné sous l'action du moyeu qui continue à tourner. Le tube étant solidaire du chariot 17, ce dernier est entraîné en rotation et vient contre la butée 112 munie du détecteur 64. Le contact avec la butée munie du détecteur 64 a pour effet que le moteur 13 change son sens de rotation et tourne donc en arrière et le chariot s'écarte de la butée. Le moyeu fait donc un nouveau passage sous le tube et le rayon tombe complètement dans le moyeu. A la fin de l'impulsion générée par le temporisateur 66, le moteur 13 reprend son sens initial de rotation (en avant), mais étant donné que le compteur 65 a compté lorsque le moteur tournait en arrière et qu'il décompte lorsque le moteur tourne en avant, la référence n'a pas été perdue et les points de montées des tubes sous l'effet du vérin sont régulièrement écartés de $2\pi/n$.

Le circuit de commande 50 permet de commander la rotation du moteur 13 de façon qu'il tourne d'un angle égale à $1,2 \times \pi/n$ lorsque le bloc 18 est en bas et d'un angle égal à $0,8\pi/n$ lorsque le bloc est en haut.

Ainsi on évite que le bloc 18 ne remonte avant que les rayons ne soient descendus dans le moyeu. Il pourrait en effet se faire que la descente du bloc 18 amène les becs, juste après les trous sur le moyeu, en ce cas il est utile de ne remonter le bloc que nettement après que les becs soient passés sur les trous suivants.

La sortie 0 du compteur-décompteur 54 est appliquée à un bistable 67 et les sorties 0 et 40 sont appliquées à un bistable 68. Les sorties des bistables 67 et 68 sont connectées à un circuit OU 69 connecté à l'entrée d'un bistable 70.

Une sortie 71 du bistable 70 sert à commander la montée du vérin 27 su bloc 18 et l'autre sortie 72 du bistable 70 sert à commander la descente du vérin 27.

Les impulsions sortant de la sortie 59 du translateur sont appliquées au compteur-décompteur 54 qui les décompte lorsque l'entrée 64″ n'est pas activée et les compte lorsque l'entrée 64″ est activée.

La sortie 72 alimente le compteur-décompteur 64. Chaque fois que le bloc 17 remonte, le compteur-décompteur 65 décompte 1. Au bout de 4 remontées le compteur-décompteur 65 affiche 0 et le signal sur 65′ disparait empêchant toute apparition de signal de commande sur les sorties 56 et 57 du dispositif de validation 55.

Le système de commande 50 comporte une commande générale 73 dont une sortie 74 fournit une impulsion commandant un premier dispositif de reset 75 qui charge le compteur 65 par le nombre sortant du transcodeur 52 (dans l'exemple, le chiffre 4) et un second dispositif de reset 76 qui charge le compteur 54 par le nombre sortant du transcodeur 53 (dans l'exemple, le nombre 300).

Le dispositif de reset 76 est également commandé par une sortie du compteur 65 chaque fois qu'il change d'état, sauf quand il arrive à zéro.

Lorsque le compteur 65 arrive à zéro, il envoie une impulsion à la commande générale 73 pour indiquer que le moyeu à reçu tous les rayons qu'il devait recevoir au cours de cette passe.

Le dispositif de reset 76 est encore commandé par un circuit 77 prenant le front avant de l'impulsion issue du bistable 67. Ainsi le compteur 54 est chargé à 300 sous l'effet de l'impulsion initiale issue de la sortie 74. Puis, lorsque le moteur a tourné de $\pi/n$, le circuit 77 fournit une impulsion au dispositif de reset 76 entraînant la charge du compteur 54.

Puis, lorsque le compteur-décompteur 65 décompte à 3, le dispositif de reset 76 reçoit un signal et ainsi de suite.

Par ailleurs, le signal issu de la butée 61 est appliqué à un dispositif 78 de commande d'ouverture des verrous 38 et 38' qui se ferment aussitôt après avoir laissé tomber un rayon dans les tubes. Le détecteur 62 est relié à un dispositif 79 qui commande avec un léger retard le verrou 37 chaque fois que le rayon disparaît de la rampe 36.

De même le détecteur 63 est relié à un dispositif 80 qui commande avec un léger retard le verrou 37' chaque fois que le rayon disparaît de la rampe 36'.

Lorsque le cycle est terminé, la commande générale 73 reçoit une impulsion de zéro du compteur 65 et sur la sortie suivante de la commande générale une impulsion est générée pour commander l'étape suivante, la terminaison de chaque étape commandant le début de l'étape suivante.

Les axes 11 et 12 s'écartent, puis la pince 42' renverse le moyeu et les axes 11 et 12 se referment.

Une nouvelle étape de remplissage du moyeu est alors déclenchée, les trous restant libres étant pourvus de rayons. Lorsque cette étape est terminée, les axes 11 et 12 s'écartent puis le bras 41 tourne emmenant le moyeu rempli vers la rampe d'évacuation tandis que le bras 41' amène entre les axes 11 et 12 un nouveau moyeu à remplir.

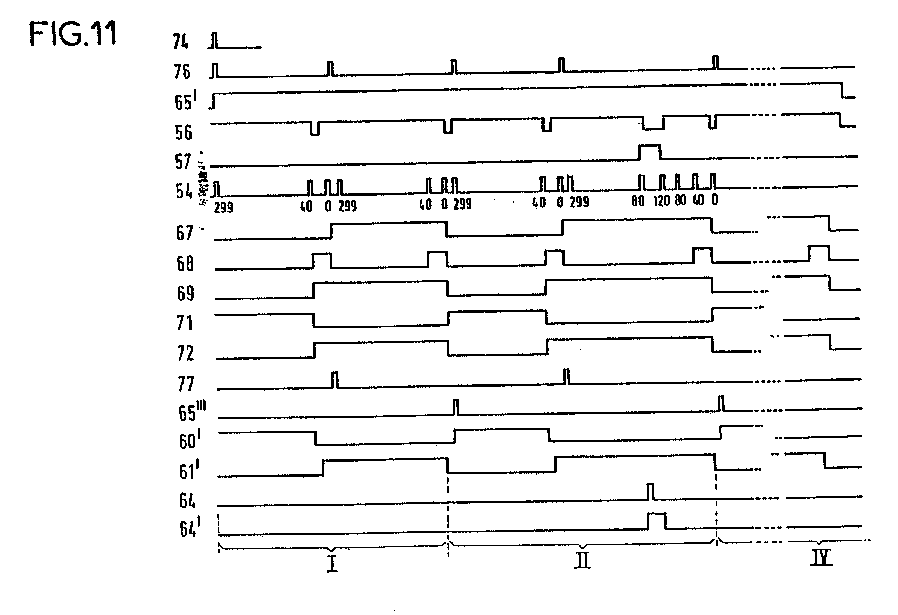

Sur la figure 11 on a représenté le diagramme des principaux signaux de fonctionnement de la figure 10.

Pendant la première période I, il ne se passe aucun incident. Pendant la seconde période II, on a figuré un incident (rayon bloqué) au moment où le compteur 54 est à l'impulsion 80. Il compte jusqu'à 120 puis recommence à décompter.

Seule la fin la quatrième période IV est ensuite figurée. Une fois cette période terminée, le moteur est arrêté et le moyeu doit être retourné.

On ramarque que le moteur ne tourne pas lorsque le bloc 18 a quitté la butée basse 61 et n'a pas encore atteint la butée haute 60 ou réciproquement.

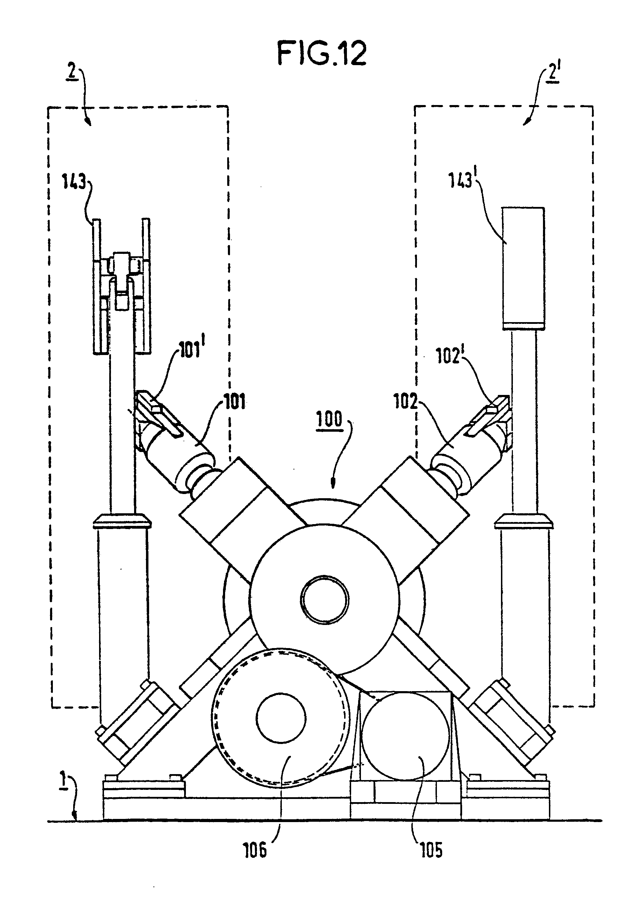

Selon une autre réalisation de l'invention représentée à la figure 12, la machine comporte 2 postes identiques 2 et 2' juxtaposés. Ces 2 portes n'ont été figurés que schématiquement, ils sont identiques à ceux représentés aux figures 1 à 10, à l'exception des moyens de manutention 100 qui comportent cette fois 4 bras 101, 102, 103, 104 au lieu de trois. Les moyens de manutention comporte une rampe d'amenée 143 des moyeux vides et une rampe d'évacuation 143' des moyeux pleins.

Ces bras sont munis à leurs extrémités d'une pince 101', 102', 103', 104'.

Les pinces tournent de 180° autour de l'axe des bras, lorsque les bras tournent de 90° autour de l'axe horizontal de rotation des moyens 100. Un moteur 105 par l'intermédiaire d'un réducteur 106 fait tourner les bras 101, 102, 103, 104.

Le fonctionnement de cette machine est le suivant:

— Le pince 101' amène un moyeu entre les axes du poste 2,
— le moyeu est rempli d'un rayon sur 2,
— la pince 101' amène le moyeu entre les axes du poste 2' après l'avoir renversé, tandis que la pince 104' amène un moyeu vide entre les axes du poste 2.

Comme dans la réalisation plus simple à un poste, les tubes de chaque poste sont positionnés de façon que pour chaque poste les 2 becs desservent simultanément un trou sur la couronne supérieure et un trou sur la couronne inférieure. Pour que la référence ne soit pas perdue au niveau du changement de poste, il est nécessaire que les becs supérieurs des 2 postes aient la même position respective par rapport au moyeu ou décalés de $2k\pi/n$ avec k entier$\geqslant$o. Bien entendu les becs seront disposés pour que les chariots soient entraînés vers les butées réglables lorsqu'un rayon se bloque.

Lorsque les 2 postes ont terminés chacun le remplissage des rayons, les axes s'écartent et la pince 101' évacue le moyeu emplis de rayons du poste 2', la pince 104' amène un moyeu à moitié empli de rayons au poste 2', la pince 103' amène un moyeu vide au poste 2 tandis que la pince 102' prend un moyeu vide qui sera amené au poste 2 au cours de la passe suivante.

Bien entendu on pourrait disposer le détecteur 64 sur la butée 17' ainsi dès que le chariot 17 quitterait cette butée 17', sous l'effet du rayon qui serait en torsion entre le moyeu et un tube le moteur tournerait dans le sens inverse du sens choisi pouvant un temps déterminé puis repartirait dans le sens choisi.

## Revendications

1. Machine à enfiler les rayons dans les moyeux (30) de roue comportant deux couronnes (31, 32) percées chacune de 2n trous répartis régulièrement, caractérisée en ce qu'elle comporte d'une part au moins un poste (2) comprenant:

— des premiers moyens (3, 4, 5, 6, 7, 8, 9, 10, 11, 12) pour maintenir le moyeu (30) dans une position où son axe fait um angle aigu inférieur à 30° avec la verticale
— des deuxièmes moyens (13) pour entraîner en rotation le moyeu (30) autour de son axe
— un premier et un second tubes (23, 25) réglables en position et faisant un faible angle avec l'axe du moyeu, terminés chacun par un bec (24, 26), chaque bec (24, 26) étant associé à une couronne (31, 32) du moyeu (30)
— des troisièmes moyens (27, 17, 18) servant à animer lesdits becs (24, 26) d'un mouvement vertical de va et vient, lesdits becs (24, 26) étant positionnés en position basse juste au-dessus des couronnes associées (31, 32) pour desservir les trous
— des quatrièmes moyens (35, 35', 36, 36', 37, 37', 38, 38', 39, 39') servant à l'alimentation rayon par rayon de chaque tube (23, 25) lorsque les becs (24, 26) sont en position basse, les rayons descendant par gravité dans les tubes avec leur partie aplatie vers le haut
— des cinquièmes moyens (50) servant à commander lesdits premiers (3, 4, 5, 6, 7, 8, 9, 10, 11, 12) deuxièmes (13) troisièmes (27, 17, 18) et quatrièmes moyens (35, 35', 36, 36', 37, 37', 38, 38', 39, 39') de façon que le moyeu (30) soit entraîné en rotation dans un sens choisi et parcoure un tour au cours duquel les becs (24, 26) soient descendus n fois, et que, après chaque descente des des becs (24, 26), un rayon soit envoyé dans chaque tube (23, 25), les becs (24, 26) étant abaissés tous les $2\pi/n$ et n'étant relevés qu'après être passés chacun sur au moins un trou et après qu'un rayon soit tombé par gravité dans le premier trou rencontré par chacun des becs,

d'autre part des moyens de manutention (40, resp. 100) du moyeu pour prendre le moyeu après la première passe et le replacer, après l'avoir renversé, dans une position où les trous restant vont être pourvus de rayons au cours d'une seconde passe.

2. Machine à enfiler les rayons selon la revendication 1, caractérisée en ce que les moyens de manutention (40) replacent le moyeu, après l'avoir renversé, dans la position qu'il avait au cours de la première passe et en ce que les tubes (23, 25) sont réglés pour que les deux becs (24, 26) surplombent chacun un trou simultanément.

3. Machine à enfiler les rayons selon la revendication 1, caractérisée en ce qu'elle comporte deux postes identiques (2, 2') et en ce que les tubes (23, 25) sont réglés pour que les deux becs (24, 26) de chaque poste surplombent chacun un trou simultanément, les becs supérieurs des deux postes (2, 2') étant décalés de $2k\pi/n$ avec $k \geqslant o$ et en ce que les moyens de manutention (100) prennent le moyeu du premier poste (2) où il a été pourvu d'un rayon, un trou sur deux, au cours de la première passe et le placent, après l'avoir renversé, entre les premiers moyens (3, 4, 5, 6, 7, 8, 9, 10, 11, 12) du second poste où, au cours, de la passe suivante, les trous restés vides sont pourvus de rayons.

4. Machine à enfiler les rayons selon la revendication 3, caractérisée en ce que les moyens de manutention (100) comportent quatre pinces (101', 102', 103', 104') qui se déplacent entre quatre positions permettant simultanément d'amener des moyeux vides en position de travail sur le premier poste (2), d'amener des moyeux dont la moitié des trous sont munis de rayons de la position de travail du premier poste (2) à la position de travail du second poste (2') et d'évacuer les moyeux pleins de la position de travail du second poste (2').

5. Machine à enfiler les rayons selon l'une des revendications précédentes, caractérisée en ce que chaque poste est muni de moyens de détection (64) fournissant un signal d'erreur indiquant que le rayon n'est pas entré complètement dans le trou correspondant et en ce que les moyens de commande (50), en réponse au signal des moyens de détection (64, 17) commandent les deuxièmes moyens (13) du poste (2, 2'), dans un premier temps, pour faire tourner le moyeu d'un angle égal ou inférieur à $\pi/n$ dans le sens inverse du sens choisi puis, dans un second temps, faire tourner du même angle dans le sens choisi.

6. Machine à enfiler les rayons selon la revendication 5, caractérisée en ce que les moyens de détection (64, 17) comportent un chariot mobile (17) latéralement à partir d'une butée (17') vers laquelle il est rappelé, les tubes (23, 25) étant montés sur ledit chariot (17), le chariot étant entraîne jusqu'à une autre butée (112) par le mouvement de rotation de la couronne communiqué au tube (23, 25) par l'intermédiaire du rayon situé pour partie dans ledit tube (23, 15) et entré incomplètement dans le trou de la couronne, les deux tubes (23, 25) étant disposés de façon à ce que le chariot (17) tende à se rapprocher de la butée (112) lorsqu'un rayon est coincé dans l'un ou l'autre tube (23, 25) et l'une des butées (17', 112) étant munie d'un détecteur (64) fournissant le signal d'erreur.

## Patentansprüche

1. Maschine zum Einfädeln der Speichen in Radnaben (30) mit 2 Kronen (31, 32), jede durchbohrt mit 2n, regelmässig verteilten, Löchern, dadurch gekennzeichnet, dass sie einerseits mindestens einen Posten (2) beträgt, bestehend aus:

— ersten Mitteln (3, 4, 5, 6, 7, 8, 9, 10, 11, 12), um die Nabe (30) festzuhalten in einer Lage, wo ihre Achse einen spitzen Winkel mit der Vertikale bildet, der weniger als 30° misst,
— zweiten Mitteln (13) um die Nabe (30) in Drehung um ihre Achse in Bewegung zu setzen,
— einem ersten und einem zweiten, in Position einstellbaren Rohr (23, 25), die einen leichten Winkel mit der Nabenachse bilden. Jedes Rohr ist mit einem Schnabel beendet (24, 26), und jeder Schnabel (24, 26) ist mit einer Krone (31, 32) der Nabe (30) vereinigt,
— dritten Mitteln (27, 17, 18), welche dazu dienen, die Schnabel (24, 26) mit einer senkrechten Hin- und Her-Bewegung zu animieren, wobei die Schnabel (24, 26) sich in Tieflage befinden, gerade oberhalb der vereinigten Kronen (31, 32), um die Löcher zu beschicken,
— vierten Mitteln (35, 35', 36, 36', 37, 37', 38, 38', 39, 39'), welche dazu dienen, jedes Rohr (23, 25) Speiche nach Speiche zu beschicken, wenn die Schnabel (24, 26) sich in Tieflage befinden, wobei die Speichen durch ihre Schwerkraft in die Rohre herunterkommen (dabei zeigt das flache Teil der Speichen nach oben),
— fünften Mitteln (50), welche die ersten (3, 4, 5, 6, 7, 8, 9, 10, 11, 12), die zweiten (13), die dritten (27, 17, 18) und die vierten (35, 35', 36, 36', 37, 37', 38, 38', 39, 39') Mitteln steuern, sodass die Nabe (30) in Drehung in einer gewünschten Richtung angetrieben wird und um eine Drehung zu durchführen, im Laufe welcher die Schnabel (24, 26) n-mal herunterkommen und dass, nach jedem Absenken der Schnabel (24, 26), eine Speiche in jedes Rohr (23, 25) beschickt wird. Die Schnabel (24, 26) werden alle $2\pi/n$ abgesenkt und kommen erst wieder hoch, wenn jeder von ihnen mindestens über ein Loch gekommen ist und nachdem eine Speiche durch Schwerkraft in das erste von jedem Schnabel getroffene Loch gefallen ist,

und andererseits aus Naben Handhabungsmitteln (40, resp. 100), um die Nabe nach dem ersten Durchgang zu greifen und sie anschliessend wieder zu plazieren, nachdem man sie gewendet hat in eine Lage, wo die restlichen Löchern während eines zweiten Durchgangs mit Speichen ausgestattet werden.

2. Maschine zum Einfädeln der Speichen laut Anspruch 1, dadurch gekennzeichnet, dass die Handhabungsmittel (40) die Nabe, nachdem sie gewendet wurde, wieder in die Lage setzen, die sie während des ersten Durchgangs hatte, und dass die Rohre (23, 25) so eingestellt sind, damit die beiden Schnabel (24, 27) jeder gleichzeitig ein Loch überhängt.

3. Maschine zum Einfädeln der Speichen laut Anspruch 1, dadurch gekennzeichnet, dass sie 2 gleiche Posten beträgt (2, 2') und dass die Rohre (23, 25) so eingestellt sind, damit die beiden Schnabel (24, 26) von jedem Posten jeder gleichzeitig ein Loch überhängt, wobei die oberen Schnabel der beiden Posten (2, 2') verschoben sind um $2k\pi/n$ mit $k\geqslant0$; sie ist ebenfalls dadurch gekennzeichnet, dass die Handhabungsmittel (100) die Nabe des ersten Postens (2), wo er mit einer Speiche versehen wurde (ein Loch auf zwei während des ersten Durchgangs) greifen und, nachdem sie sie gewendet haben, sie zwischen die ersten Mitteln (3, 4, 5, 6, 7, 8, 9, 10, 11, 12) des zweiten Postens legen wo, während des zweiten Durchgangs, die leer gebliebenen Löcher mit Speichen versehen werden.

4. Maschine zum Einfädeln der Speichen laut Anspruch 3, dadurch gekennzeichnet, dass die Handhabungsmittel (100) vier Zangen (101', 102', 103', 104') betragen, welche sich zwischen vier Lagen bewegen, die gleichzeitig erlauben, leere Naben in Arbeitsposition zu bringen in den ersten Posten (2), Naben, deren Löcher halb mit Speichen versehen sind, von der Arbeitsposition des ersten Postens (2) zu der Arbeitsposition des zweiten Postens (2') zu bringen, und die vollen Naben von der Arbeitsposition des zweiten Postens (2') zu entfernen.

5. Maschine zum Einfädeln der Speichen laut eine der vorher aufgeführten Ansprüche, dadurch gekennzeichnet, dass jeder Posten mit Detektionsmitteln (64) versehen ist, die ein Fehler Signal geben, der anzeigt, dass die Speiche nicht ganz in das betreffende Loch eingeführt wurde. Sie ist dadurch gekennzeichnet, dass die Steuerungsmittel (50), als Antwort auf das Signal der Detektionsmittel (64, 17) die zweiten Mittel (13) des Postens (2, 2') steuern, erstens um die Nabe um einen Winkel gleich oder weniger als $\pi/n$ in der entgegengesetzten Richtung zu der Richtung, die gewählt wurde, drehen zu lassen, und zweitens, um die Nabe um den gleichen Winkel drehen zu lassen, in der gewünschten Richtung.

6. Maschine zum Einfädeln der Speichen laut Anspruch 5, dadurch gekennzeichnet, dass die Detektionsmittel (64, 17) einen ab einem Anschlag (17') seitlich beweglichen Support (17) betragen, zu welchem er zurückgerufen wird; die Rohre (23, 25) sind auf diesem Support (17) montiert; der Support wurd zu einem anderen Anschlag (112) angetrieben durch die Drehbewegung der Krone, welche dem Rohr (23, 25) übermittelt wird durch die sich teilweise darin befindende Speiche, die unvollständig in das Loch der Krone eingeführt wurde; dabei sind die beiden Rohre (23, 25) so eingesetzt, dass der Support (17) danach trachtet, sich dem Anschlag (112) zu nähern, wenn eine Speiche in dem einen oder anderen Rohr (23, 25) geklemmt ist; da die Anschläge (17', 112) mit Detektoren (64) versehen sind, geben sie das Fehler Signal.

## Claims

1. Machine for fitting spokes into wheel hubs (30) comprising two rings (31, 32) each pierced with 2n evenly spaced holes, characterised in that there is provided on the one hand at least a post (2) comprising:

— first means (3, 4, 5, 6, 7, 8, 9, 10, 11, 12) for maintaining said hub (30) in a position in which its axis forms an acute angle less than 30° with the vertical,

— second means (13) for rotating said hub (30) about its axis,

— a first and second tube (23, 25) adjustable in position and forming a small angle with the aixs of said hub, each terminating in a nose-piece (24, 26), each said nose-piece (24, 26) being associated with a ring (31, 32) of said hub (30),

— third means (27, 17, 18) for reciprocating said nose-pieces (24, 26) in the vertical direction, said nose-pieces (24, 26) being positioned in a low position just above the associated rings (31, 32) for supplying the holes,

— fourth means (35, 35', 36, 36', 37, 37', 38, 38', 39, 39') for supplying each tube (23, 25) spoke by spoke when said nose-pieces (24, 26) are in their low position, said spokes descending under the effect of gravity into said tubes with their flattened part upwards,

— fifth means (50) for controlling said first (3, 4, 5, 6, 7, 8, 9, 10, 11, 12), second (13), third (27, 17, 18) and fourth (35, 35', 36, 36', 37, 37', 38, 38', 39, 39') means so that said hub (30) is rotated in a selected direction and makes a revolution during which said nose-pieces (24, 26) are moved downwardly n times, and so that, after each downward movement of said nose-pieces (24, 26), a spoke is fed into each tube (23, 25), said nose-pieces (24, 26) being lowered every $2\pi/n$ and only being raised again after having passed, each one, over at least one hole and after a spoke has fallen under the effect of gravity into the first hole met by each of said nose-pieces.

on the other hand means (40, resp. 100) for handling said hub so as to take said hub after the first pass and place it, after turning it over, in a position where the remaining holes will be provided with spokes during a second pass.

2. The machine for fitting spokes as claimed in claim 1, characterised in that said handling means (40) place said hub, after turning it over, in the position which it had during the first pass and said tubes (23, 25) are adjusted so that the two nose-pieces (24, 26) each overhand a hole simultaneously.

3. The machine for fitting spokes as claimed in claim 1, characterised in that two identical posts (2, 2') are provided and said tubes (23, 25) are adjusted so that the two nose-pieces (24, 26) of each post each overhang a hole simultaneously, the upper nose-pieces of the two posts (2, 2') being offset by $2k\pi/n$ with $k \geqslant 0$ and the handling means (100) take the hub from the first post (2) where it has been provided with spokes, in one hole out of two, during the first pass and place it, after turning it over, between said first means (3, 4, 5, 6, 7, 8, 9, 10, 11, 12) of the second post in which, during the next pass, the remaining empty holes are provided with spokes.

4. The machine for fitting spokes as claimed in claim 3, characterised in that said handling means (100) comprise four gripping means (101', 102', 103', 104') which move between four positions for simultaneously bringing empty hubs into the work position in the first post (2), taking hubs half of whose holes are provided with spokes from the work position of the first post (2) to the work position of the second post (2') and discharging the full hubs from the work position of the second post (2').

5. The machine for fitting spokes as claimed in one of the preceding claims, characterised in that each post is provided with detection means (64) supplying an error signal indicating that the spoke has not completely entered into the corresponding hole and the control means (50), in response to the signal from the detection means (64, 17) control the second means (13) of the post (2, 2'), in a first stage, to cause the hub to rotate through an angle equal to or less than $\pi/n$ in the reverse direction to the direction chosen then in a second stage causing rotation through the same angle in the chosen direction.

6. The machine for fitting spokes as claimed in claim 5, characterised in that said detection means (64, 17) comprise a carriage (17) laterally movable from a stop (17') towards which it is returned, said tubes (23, 25) being mounted on said carriage (17), said carriage being driven to another stop (112) by the rotational movement of the ring communicated to said tube (23, 25) by the spoke situated partly in said tube (23, 25) and incompletely inserted into the hole of the ring, the two tubes (23, 25) being disposed so that said carriage (17) tends to approach said stop (112) when a spoke is jammed in one or the other tube (23, 25) and one of the stops (17', 112) being provided with a detector (64) supplying the error signal.

FIG.1

FIG.2

0052364

# FIG.3

# FIG.4

# FIG.5

FIG.6

# FIG.7

# FIG.8

# FIG.9A

# FIG.9B

FIG.10

0052 364

FIG.11

# FIG.12